# EUROPEAN PATENT SPECIFICATION

(11) **EP 4 636 025 B1**
(45) Date of publication and mention of the grant of the patent: **02.12.2026**
(21) Application number: 24171417.9
(22) Date of filing: 19.04.2024
(51) Int. Cl.: C08L 23/12, C08L 23/14, C08L 23/10

(54) **POLYOLEFINS COMPOSITIONS OBTAINED FROM RECYCLED POLYOLEFINS**
POLYOLEFINZUSAMMENSETZUNGEN AUS RECYCELTEN POLYOLEFINEN
COMPOSITIONS DE POLYOLÉFINES OBTENUES À PARTIR DE POLYOLÉFINES RECYCLÉES

(43) Date of publication of application: 22.10.2025
(73) Proprietor: Basell Poliolefine Italia S.r.l., 20121 Milano (IT)
(72) Inventor: HEES, Timo, 65926 Frankfurt/M. (DE); CAVALIERI, Claudio, 44122 Ferrara (IT); DEL VECCHIO, Marco, 44122 Ferrara (IT)
(74) Representative: LyondellBasell

(56) References cited:
- WO-A1-2022/258576
- WO-A1-2022/258578
- US-B2- 11 203 683
- STOIAN SERGIU ALEXANDRU ET AL: "Recycled polypropylene with improved thermal stability and melt processability", JOURNAL OF THERMAL ANALYSIS AND CALORIMETRY, KLUWER, DORDRECHT, NL, vol. 138, no. 4, 21 September 2019 (2019-09-21), pages 2469 - 2480, XP036947534, ISSN: 1388-6150, [retrieved on 20190921], DOI: 10.1007/S10973-019-08824-2

## Description

### FIELD OF THE INVENTION

The present disclosure relates to polypropylene compositions containing recycled elastomeric material that can be used for the preparation of blow molded articles.

### BACKGROUND OF THE INVENTION

Polyolefins, in particular polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film and BOPP film), rigid packaging, blow moulded bottles and injection moulded containers. Usually, through a step of separation from other polymers, such as PVC, PET or PS, two main polyolefinic fractions are obtained, namely polyethylenes (in particular HDPE LDPE, LLDPE) and polypropylenes (homopolymers, random copolymers, heterophasic copolymers).

However, the multicomponent nature of the recycled material often results in low mechanical and optical performances of the polyolefin formulations in which part of the virgin polymer is replaced by recycled polymer.

In an effort to mitigate the mechanical properties deterioration the use of compatibilizer ingredients has been proposed in the art. US5,030,662 for example discloses the use of compatibilizer of the type that reacts with the polymer matrix under heat and shearing conditions either by free radical or ionic mechanism. Examples of compatibilizers according to this document are olefin copolymers with polar monomers such as maleic anhydride or vinyl acetate.

WO2007/071494 discloses the use of a a heterophasic polyolefin composition having flexural modulus equal to or lower than 600 MPa as a compatibilizer agent for a recycled polyolefin composition. WO 2022/258578 A1 is also concerned with polymer compositions comprising recycled polymers. It has now unexpectedly been found that certain specific formulations of recycled material although be based on multiplicity of chemically different components when mixed with virgin polymers generate polyolefin compositions combining good mechanical properties profile with an optimum balance of impact properties and tensile modulus.

### SUMMARY OF THE INVENTION

It is therefore an object of the present disclosure a recycled polyolefin composition comprising:
A) from 40 wt% to 65 wt%; preferably from 42 wt% to 60 wt%; more preferably from 45 wt% to 58 wt%; of a recycled polypropylene composition;
B) from 20 wt% to 40 wt%; preferably from 22 wt% to 38 wt%; more preferably from 25 wt% to 35 wt%; of a first polypropylene ethylene copolymer comprising:
   - (b1) from 67 wt% to 89 wt%, preferably from 69 wt% to 87 wt%; more preferably from 73 wt% to 83 wt% of a propylene homopolymer, having:
   - a fraction soluble in xylene at 25°C lower than 4.0 wt%; preferably lower than 3.0 wt%; more preferably lower than 2.5 wt%; and
   - a Melt Flow Rate (ISO 1133 230°C/5.0 kg) ranging from 0.9 to 3.4 g/10min; preferably ranging from 1.1 to 3.0 g/10min; more preferably ranging from 1.3 to 2.7 g/10min;
   - (b2) from 11 wt% to 33 wt%; preferably from 13 wt% to 31 wt%; more preferably from 14 wt% to 27 wt% of a copolymer of propylene and ethylene having:
   - units derived from ethylene, measured according to ¹³C-NMR, in an amount ranging from 35.0 wt% to 65.0 wt%; preferably from 38.0 wt% to 62.0 wt%; more preferably ranging from 42.0 wt% to 58.3 wt%;

   said polypropylene ethylene copolymer (B) being further characterized by:
      - a Melt Flow Rate (ISO 1133 230°C/5.0 kg) ranging from 0.3 to 2.8 g/10 min; preferably from 0.5 to 2.5 g/10min; more preferably ranging from 0.8 to 2.1 g/10min;
      - an amount of fraction soluble in xylene at 25°C ranging from 7.0 wt% to 31.0 wt%; preferably from 9.0 wt% to 29.0 wt% ; more preferably from 11.0 wt% to 27.0 wt%;
      - intrinsic viscosity fraction soluble in xylene at 25°C, measured in tetrahydronaphthalene at 135 °C, ranging from 1.9 to 4.5 dl/g; preferably from 2.2 to 4.1 dl/g; more preferably ranging from 2.5 to 3.7 dl/g;
   in the said polypropylene ethylene copolymer the sum of b1) and b2), being referred to the total weight of b1) and b2), is 100,
C) from 14 wt% to 28 wt%; preferably from 15 wt% to 26 wt%; more preferably from 16 wt% to 24 wt%; of a second polypropylene ethylene copolymercomprising:
   - (c1) from 21 wt% to 43 wt%, preferably from 23 wt% to 41 wt%; more preferably from 27 wt% to 37 wt% of a propylene ethylene copolymer, having:
   - units derived from ethylene, measured according to ¹³C-NMR, in an amount ranging from 1.7 wt% to 4.5 wt%; preferably from 2.0 wt% to 4.3 wt%; more preferably ranging from 2.6 wt% to 3.7 wt%;
   - a fraction soluble in xylene at 25°C lower than 8.0 wt%; preferably lower than 7.5 wt%; more preferably lower than 7.0 wt%; even more preferably lower than 6.5 wt%; preferably being higher than 0.5 wt% and
   - a Melt Flow Rate (ISO 1133 230°C/5.0 kg) ranging from 18.0 to 34.0 g/10min; preferably ranging from 20.0 to 32.5 g/10min; more preferably ranging from 22.0 to 30.1 g/10min;
   - (c2) from 57 wt% to 79 wt%; preferably from 59 wt% to 77 wt%; more preferably from 63 wt% to 73 wt% of a copolymer of propylene and ethylene having:
      - units derived from ethylene, measured according to ¹³C-NMR, in an amount ranging from 18.0 wt% to 36.0 wt%; preferably from 20.2 wt% to 34.4 wt%; more preferably ranging from 22.8 wt% to 32.3 wt%;

   said polypropylene ethylene copolymer (C) being further characterized by:
      - a Melt Flow Rate (ISO 1133 230°C/5.0 kg) ranging from 0.2 to 1.7 g/10 min; preferably from 0.3 to 1.4 g/10min; more preferably ranging from 0.4 to 1.2 g/10min;
      - an amount of fraction soluble in xylene at 25°C ranging from 52.0 wt% to 76.0 wt%; preferably from 54.0 wt% to 74.0 wt% ; more preferably from 56.0 wt% to 72.0 wt%;
      - intrinsic viscosity fraction soluble in xylene at 25°C, measured in tetrahydronaphthalene at 135 °C, ranging from 2.1 to 4.7 dl/g; preferably from 2.4 to 4.3 dl/g; more preferably ranging from 2.7 to 3.9 dl/g; and,
   in the said composition the sum of c1) and c2), being referred to the total weight of c1) and c2), is 100,
   the sum of the amounts of (A), (B) and (C) being referred to the total weight of (A), (B) and (C) is 100;
   the recycled polypropylene composition (A) has:
   Ethylene derived units content, measured with ¹³C-NMR, ranging from 2.50 wt% to 7.30 wt%;
   Butene derived units content, measured with ¹³C-NMR, ranging from 0.05 wt% to 0.30 wt%;
   Hexene derived units content, measured with ¹³C-NMR, ranging from 0.03 wt% to 0.23 wt%;
   Octene derived units content, measured with ¹³C-NMR, ranging from 0.02 wt% to 0.50 wt%;
   Polyethylene terephthalate content , measured with ¹³C-NMR, ranging from 0.05 wt% to 0.8 wt% Propylene derived units content, measured with ¹³C-NMR, higher than 87.4 wt%
   Density, ISO 1183-1, ranging from 0.9400 Kg/dm³ to 0.9500 Kg/dm³; preferably ranging from 0.9423 Kg/dm³ to 0.9484 Kg/dm³; more preferably ranging from 0.9448 Kg/dm³ to 0.9476 Kg/dm³;
   Melt Flow Rate (ISO 1133 230°C/2.16 kg) ranging from 1.2 to 20.3 g/10min; preferably ranging from 3.4 to 17.4 g/10min; more preferably ranging from 5.2 to 12.3 g/10min.

### DETAILED DESCRIPTION OF THE INVENTION

Preferably the recycled polypropylene composition (A) has:
Tensile modulus, measured according to ISO 527-2, ranging from 1060N/mm² to 1900 N/mm²; preferably ranging from 1260 N/mm² to 1780 N/mm²; more preferably ranging from 1350 N/mm² to 1760 N/mm².

Preferably the recycled polypropylene composition (A) has:
Charpy impact test at 23°C, determined according to ISO 179-1eA, and ISO 1873-2, ranging from 2.2 KJ/m² to 9.0 KJ/m²; preferably ranging from 3.1 KJ/m² to 8.2 KJ/m²; more preferably ranging from 3.4 KJ/m² to 7.3 KJ/m².

The term "copolymer" as used herein refers to polymers with two different recurring units.

The term "recycled" is used to designate polymer materials deriving from at least one cycle of processing into manufactured articles, as opposed to virgin polymers that is a polymer not subjected at least one cycle of processing into manufactured articles.

The term "consisting essentially of", as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.

The features of the components forming the polypropylene composition are not inextricably linked to each other. This means that a certain level of preference of one the features should not necessarily involve the same level of preference of the remaining features of the same or different components. On the contrary, it is intended in the present disclosure that any component (A), (B) and (C) and any preferred range of features of components (A), (B) and (C) can be combined with any preferred range of one or more of the features of components (A) to (B) and with any possible additional component, and its features, described in the present disclosure.

Components B) and C) can be prepared by polymerizing propylene, optionally in mixture with ethylene in the presence of a catalyst comprising the product of the reaction between:
i) a solid catalyst component comprising Ti, Mg, Cl, and at least an internal electron donor compound;
ii) an alkylaluminum compound and,
iii) an external electron-donor compound; preferably the external donor compound has the general formula:
   (R⁷)ₐ(R⁸)_{b}Si(OR⁹)_{c}, where a and b are integers from 0 to 2, c is an integer from 1 to 4 and the sum (a+b+c) is 4; R⁷, R⁸, and R⁹, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt. %.

The amount of Ti may range from 0.5 to 7% and more preferably from 0.7 to 5wt. %.

According to one method, the solid catalyst component (i) can be prepared by reacting a titanium compound of formula Ti(OR)_{q-y}X_{y}, where q is the valence of titanium and y is a number between 1 and q, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl₄; the mixture is heated up to 80-130°C and kept at this temperature for 0.5-2 hours. The treatment with TiCl₄ can be carried out one or more times. The electron donor compound can be added in the desired ratios during the treatment with TiCl₄.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et3Cl₃, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R⁷ and R⁸ is selected from branched alkyl, cycloalkyl or aryl groups with 3-10 carbon atoms optionally containing heteroatoms and R⁹ is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R⁸ is a branched alkyl or cycloalkyl group, optionally containing heteroatoms, and R⁹ is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

Components B) and C) can be prepared in a continuous sequential polymerization process, wherein component b1) or c1) is prepared in the first reactor and component (b2) or c2) is prepared in the second reactor in the presence of component b1) or c1) according to the known techniques and operating in gas phase, or in liquid phase in the presence or not of inert diluent, or by mixed liquid-gas techniques.

Component B) is preferably a commercial polymer grade such as Moplen EP440G sold by Lyondellbasell.

Component C) is preferably a commercial polymer grade such as Adflex Q100F sold by Lyondellbasell.

Component (A) can be a Post-Industrial Resin (PIR) or a Post-Consumer Resin (PCR).

Post-Industrial Resin (PIR) is the waste generated from the manufacturing process that is reclaimed or used again in the same material.

Post-Consumer Resin (PCR) defined as recyclate derived from an end product that has completed its life cycle as a consumer item and would otherwise be disposed of as waste.

If needed, the final composition comprising (A)+(B) can be subject to a chemical treatment with organic peroxides in order to lower the average molecular weight and increase the melt flow index up to the value needed for the specific application.

Preferably the tensile modulus of the whole recycled polyolefin composition ranges from to 740 MPa to 1640 MPa more preferably from 840 to 1440 MPa; even more preferably from 950 to 1390 MPa .

The value of Charpy impact at 23°C preferably ranges from 30.0 KJ/m² to 60.0 KJ /m² ; more preferably it ranges from 35.0 KJ /m² to 55.1 KJ / m²; even more preferably it ranges from 40.5 KJ /m² to 50.6 KJ / m².

The whole propylene composition of the present disclosure can be obtained by mechanical blending of the components (A) (B) and (C) according to conventional techniques.

The final composition comprising the components (A) (B) and (C) may be added with conventional additives, fillers and pigments, commonly used in olefin polymers such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents may be added to the compositions of the present disclosure in quantities ranging from 0.05 wt% to 2 wt%, more preferably from 0.1 wt% to 1 wt%, with respect to the total weight, for example.

The propylene polymer composition of the present disclosure can be for the production of blow molded articles such as bottle and containers.

The following examples are given in order to illustrate, but not limit the present disclosure.

### EXAMPLES

### CHARACTERIZATIONS

### Xylene-soluble (XS) Fraction at 25 °C

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%).

### Melt Flow Rate (MFR)

Measured according to ISO 1133-1 at 230 °C with a load of 2.16 kg or 5 kg, as specified.

### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ η ]. **Polydispersity index:** Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation:$P . I . = 105 / Gc$ in which Gc is the crossover modulus which is defined as the value (expressed in Pa) at which G'=G" wherein G' is the storage modulus and G" is the loss modulus.

### Evaluation of 13C NMR spectrum of Ethylene, Propylene, 1-Butene, 1-Hexene and 1-Octene copolymers

In the ¹³C NMR spectrum only the signals from Ethylene, Propylene, 1-Butene, 1-Hexene and 1-Octene copolymers were considered (assignments of peak relevant for quantification are reported in Table 1). Triad distribution (considering only EBE, EHE and EOE due to the low amount of these comonomers) was obtained from the integration of relevant peaks in ¹³C NMR spectrum (possible overlaps of the peaks of the antioxidant AO1010 were taken into account), using the following relations: $PPP = 100 {I}_{11} / Σ$ for ${I}_{3} / {I}_{4} < 1 : PPE = 100 {I}_{3} / Σ$ for ${I}_{3} {/ I}_{4} > 1 : PPE = 100 \left({I}_{8}-6{I}_{4}\right) / Σ$ $EPE = 100 {I}_{7} / Σ$ $EBE = 100 {I}_{1} / Σ$ $EHE = 100 {I}_{6} / Σ$ $EOE = 100 \left({I}_{2}-{I}_{6}\right) / Σ$ $XEX = 100 {I}_{13} / Σ$ $XEE = 100 \left({I}_{12}-{I}_{2}\right) / Σ$ $EEE = 100 \left(0.5\left({I}_{10}-{I}_{2}\right)+0.25\left({I}_{9}+{I}_{8}\right)\right) / Σ$

Where: $Σ = {I}_{11} + \left({I}_{3} or \left({I}_{8}-6{I}_{4}\right)\right) + {I}_{7} + {I}_{1} + {I}_{6} + {I}_{2} - {I}_{6} + {I}_{13} + {I}_{12} - {I}_{2} + 0.5 \left({I}_{10}-{I}_{2}\right) + 0.25 \left({I}_{9}+{I}_{8}\right)$ and Iₙ are the areas of the corresponding carbon following the numbering scheme reported in Table 1 and X can be propylene, 1-butene , 1-hexene or 1-octene

The molar content of Ethylene, Propylene, 1-Butene and 1-Octene is obtained from triads using the following relations: $P \left(m%\right) = PPP + PPE + EPE$ $B \left(m%\right) = EBE$ $H \left(m%\right) = EHE$ $O \left(m%\right) = EOE$ $E \left(m%\right) = EEE + XEE + XEX$

Molar content was transformed in weight using monomers molecular weight.

### Evaluation of 1H NMR spectrum

The molar content of Polyethylene terephthalate (PET), Polystyrene (PS) and ethylene/propylene/1-butene/1-hexene/1-octene copolymers were obtained from ¹H spectra. The aromatic hydrogen peaks of PET and PS (assignments according to Table 2) were used, while the amount of ethylene/propylene/1-Butene/1-Hexene/1-Octene copolymers was determined by the integral of all the aliphatic hydrogens, from which the contribution of the 3 aliphatic hydrogens of the polystyrene was subtracted.

Molar amounts of PET, PS and E/P/B/H/O copolymers were evaluated from the following relations: $PET = 100 0.25 {I}_{a} / Σ$ $PS = 100 0.5 {I}_{c} / Σ$ $Total aliphatic E / P / B / H / O copolymers = 100 0.5 \left({I}_{e}-3PS-{9 I}_{d}\right) / Σ$

Where $Σ = 0.25 {I}_{a} + 0.5 {I}_{c} + 0.5 \left({I}_{d}-3PS-100 0.5 \left({I}_{e}-3PS-{9 I}_{d}\right)\right. / Σ$

Molar content was transformed in weight percentage using monomers molecular weight considering the MW of CH₂ to estimate the weight contribution from ethylene/propylene/1-butene/1-hexene/1-octene copolymers.

The weight content of P, E, B, H and O obtained from ¹³C spectrum was rescaled to obtain the weight percentage in the whole sample by multiplying each value (wt%) from triads with the rescaling factor "RF":$RF = \left[100-PET\left(wt%\right)-PS\left(wt%\right)\right] / 100$ where PET(wt%) and PS(wt%) are the compositions obtained from ¹H spectrum.

**Table a Assignments of the ¹³C NMR spectrum of Ethylene/Propylene/1-Octene/1-Butene copolymers**

| Number | Chemical Shift (ppm) | Carbon | Sequence |
|---|---|---|---|
| 1 | 39.6 | T_{δδ} | EBE |
| 2 | 38.8 | T_{δδ} | EOE + EHE |
| 3 | 38.2 - 37.6 | S_{αγ} | PE |
| 4 | 36.2 | CH₂ | AO1010 |
| 6 | 34.0 | 4B₄ | EHE |
| 7 | 33.3 - 33.2 | T_{δδ} | EPE |
| 8 | 30.8 - 30.7 | T_{βδ} | PPE |
| 8 | 30.3 | S_{γδ} | XEEE |
| 9 | 30.2 | S_{γδ} | PEEE |
| 10 | 29.9 | S_{δδ +} 4B₆ | EEE + O |
| 11 | 28.8 - 28.2 | T_{ββ} | PPP |
| 12 | 27.4 - 26.7 | S_{βδ} + 5B₆ | XE+O |
| 13 | 24.7 - 24.1 | S_{ββ} | XEX |

**Table b Assignments of the ¹H NMR spectrum of Ethylene/Propylene/1-Butene/1-Hexene/1-Octene copolymers containing PS and PET**

| Number | Chemical Shift (ppm) | Proton | Sequence |
|---|---|---|---|
| a | 8.08 | CH | PET |
| b | 7.20 - 6.81 | CH | PS |
| c | 6.81 - 6.33 | CH | PS |
| d | 2.91 | CH₂ | AO1010 |
| e | 1.80 - 0.70 | CH + CH₂ + CH3 | Total aliphatic |
| | 1.25 | CH + CH₂ | PS |

### Ethylene (C2) content

### ¹³C NMR of propylene/ethylene copolymers components B) and C)

¹³C NMR spectra were acquired on a Bruker AV-600 spectrometer equipped with cryoprobe, operating at 160.91 MHz in the Fourier transform mode at 120°C.

The peak of the S_{ββ} carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules 1982, 15, 4, 1150-1152) using the following equations:

| | | |
|---|---|---|
| PPP = 100 T_{ββ}/S | PPE = 100 T_{βδ}/S | EPE = 100 T_{δδ}/S |
| PEP = 100 S_{ββ}/S | PEE= 100 S_{βδ}/S | EEE = 100 (0.25 S_{γδ}+0.5 S_{δδ})/S |

$S = {T}_{ββ} + {T}_{βδ} + {T}_{δδ} + {S}_{ββ} + {S}_{βδ} + 0.25 {S}_{γδ} + 0.5 {S}_{δδ}$

The molar percentage of ethylene content was evaluated using the following equation:
$E % mol = 100 * \left[PEP+PEE+EEE\right]$The weight percentage of ethylene content was evaluated using the following equation: $E % wt . = \frac{100 * E % mol * {MW}_{E}}{E % mol * {MW}_{E} + P % mol * {MW}_{P}}$
where P% mol is the molar percentage of propylene content, while MW_{E} and MW_{P} are the molecular weights of ethylene and propylene, respectively.

The product of reactivity ratio *r*₁*r*₂ was calculated according to Carman (C.J. Carman, R.A. Harrington and C.E. Wilkes, Macromolecules, 1977; 10, 536) as: ${r}_{1} {r}_{2} = 1 + \left(\frac{EEE + PEE}{PEP}+1\right) - \left(\frac{P}{E}+1\right) {\left(\frac{EEE + PEE}{PEP}+1\right)}^{0.5}$

The tacticity of Propylene sequences was calculated as mm content from the ratio of the PPP mmT_{ββ} (28.90-29.65 ppm) and the whole T_{ββ} (29.80-28.37 ppm).

### Samples for the mechanical tests

Samples have been obtained according to ISO 1873-2:2007.
**Charpy impact test** is determined according to ISO 179-1eA, and ISO 1873-2
**Elongation at yield:** measured according to ISO 527.
**Elongation at break:** measured according To ISO 527
**Stress at break:** measured according to ISO 527.
**Tensile Modulus** according to ISO 527-2,
**Melting point and crystallization point**

The melting point has been measured by using a DSC instrument according to ISO 11357-3, at scanning rate of 20C/min both in cooling and heating, on a sample of weight between 5 and 7 mg., under inert N₂ flow. Instrument calibration made with Indium.
**Density,** measured according to ISO 1183-1

### EXAMPLES

### Example 1

### Component A)

Component A is recycled polymer grade from raffia bags The properties of the polymer are reported on table 1.

**Table 1**

| Component A | | A |
|---|---|---|
| MFR 2.16 Kg/230°C | g/10min | 7,77 |
| Density | kg/dm3 | 0,9465 |
| XS | % | 4,40 |
| Tm | °C | 160.2; 123.1 |
| Tc | °C | 118.4; 110.5 |
| Hc | J/g | -94.1 |
| Hm | J/g | 83.4 |
| C2 (NMR) | wt% | 4.8 |
| C3 (NMR) | wt% | >88.0 |
| C4 (NMR) | wt% | 0.2 |
| C6 (NMR) | wt% | 0.1 |
| C8 (NMR) | wt% | 0.2 |
| PET | wt% | 0.4 |
| Aluminum | ppm | 80 |
| Chlorine | ppm | 110 |
| Magnesium | ppm | 250 |
| Titanium | ppm | 450 |
| Antimonium | ppm | - |
| Barium | ppm | - |
| Bromium | ppm | - |
| Chromium | ppm | - |
| Calcium | ppm | 15000 |
| Iron | ppm | - |
| Fluorine | ppm | - |
| Lead | ppm | 10 |
| Phosphorus | ppm | 50 |
| Potassium | ppm | 30 |
| Copper | ppm | 10 |
| Silicium | ppm | 210 |
| Sodium | ppm | 100 |
| Zinc | ppm | 25 |
| Zirconium | ppm | <10 |
| Sulfur | ppm | 40 |
| Ashes (800°C) before antiacid treatment | ppm | 35313 |
| C- emission VDA277 | µg/gr | 7,3 |
| Corrosivity (280°C) | | 0 |
| Mechanical Properties | | |
| Tensile Modulus | N/mm² | 1560 |
| Charpy Impact @ 23°C | KJ/m² | 3,8 |
| Charpy Impact @ 0°C | KJ/m² | 2 |
| Charpy Impact @ -20°C | KJ/m² | - |
| Stress @ yield | N/mm² | 32 |
| Elongation @ yield | % | 10 |
| Stress @ break | N/mm² | 18 |
| Elongation @ break | % | 65 |
| D/B TT | °C | >23 |

### Component B)

Component B is a commercial grade Moplen EP440G sold by LyondellBasell, it can be synthesized according to the procedure known in the art, Moplen EP440G has the property set forth in table 2.

**Table 2**

| | | |
|---|---|---|
| | | |

| component b1) | | |
|---|---|---|
| XS | wt% | 2.0 |
| MFR 230°C/2.16 kg | g/10 min | 1.9 |
| split | wt% | 79 |

| component b2) | | |
|---|---|---|
| C2 content | wt% | 51.0 |
| split | wt% | 21 |

| total composition | | |
|---|---|---|
| MFR 230°C/5 kg | g/10 min | 1.3 |
| XS | wt% | 19 |
| IV on XS | dl/g | 3.0 |

| | | |
|---|---|---|
| XS fraction soluble in xylene at 25°C C2 ethylene derived units IV intrinsic viscosity | | |

### Component C)

Component C is a commercial grade Adflex Q100F sold by LyondellBasell, it can be synthesized according to the procedure known in the art, Adflex Q100F has the property set forth in table 3.

**Table 3**

| | | |
|---|---|---|
| | | |

| component c1) | | |
|---|---|---|
| XS | wt% | <6.5 |
| C2 content | wt% | 3.2 |
| MFR 230°C/2.16 kg | g/10 min | 25.0 |
| split | wt% | 32 |

| component c2) | | |
|---|---|---|
| C2 content | wt% | 27.0 |
| split | wt% | 68 |

| total composition | | |
|---|---|---|
| MFR 230°C/5 kg | g/10 min | 0.6 |
| XS | wt% | 64 |
| IV on XS | dl/g | 3.2 |

| | | |
|---|---|---|
| XS fraction soluble in xylene at 25°C C2 ethylene derived units IV intrinsic viscosity | | |

Components A), B) and C) have been blended in an extruder (Berstorff extruder). The polymer particles are extruded under nitrogen atmosphere in a twin screw extruder, at a rotation speed of 250 rpm and a melt temperature of 200-250° C. The composition is reported in table 4 and the characterization of the obtained composition is reported in table 5.

**Table 4**

| Ex | 1 |
|---|---|
| Component A wt% | 50 |
| Component B) wt% | 30 |
| Component C) wt% | 20 |

**Table 5**

| | unit | EX 1 |
|---|---|---|
| Melt Flow Rate | g/10min | 2.96 |
| Charpy 23°C | KJ/ m² | 44.9 |
| Charpy 0°C | KJ/ m² | 7.2 |
| Tensile Modulus | N/mm² | 1050 |
| Stress at yield | N/mm² | 22.4 |
| Elongation at yield | % | 10.5 |
| Stress at break | N/ mm² | 18.7 |
| Elongation at break | % | 597 |
| Hc | J/g | -88 |
| Hm | J/g | 74.4 |
| Tm | °C | 163.8 |
| Tc | °C | 118.1 |
| HDT 0.45 Mpa | °C | 78.7 |

## Claims

1. A recycled polyolefin composition comprising:
A) from 40 wt% to 65 wt%; wt% of a recycled polypropylene composition;
B) from 20 wt% to 40 wt%; of a first polypropylene ethylene copolymer comprising:
(b1) from 67 wt% to 89 wt%, of a propylene homopolymer, having:
- a fraction soluble in xylene at 25°C lower than 4.0 wt%; and
- a Melt Flow Rate (ISO 1133 230°C/5.0 kg) ranging from 0.9 to 3.4 g/10min;
- (b2) from 11 wt% to 33 wt%; of a copolymer of propylene and ethylene having:
- units derived from ethylene, measured according to ¹³C-NMR, in an amount ranging from 35.0 wt% to 65.0 wt%;
said polypropylene ethylene copolymer (B) being further **characterized by**:
- a Melt Flow Rate (ISO 1133 230°C/5.0 kg) ranging from 0.3 to 2.8 g/10 min;
- an amount of fraction soluble in xylene at 25°C ranging from 7.0 wt% to 31.0 wt%;
- intrinsic viscosity fraction soluble in xylene at 25°C, measured in tetrahydronaphthalene at 135 °C, ranging from 1.9 to 4.5 dl/g;
in the said polypropylene ethylene copolymer the sum of b1) and b2), being referred to the total weight of b1) and b2), is 100,
C) from 14 wt% to 28 wt%; of a second polypropylene ethylene copolymercomprising:
- (c1) from 21 wt% to 43 wt%, of a propylene ethylene copolymer, having:
- units derived from ethylene, measured according to ¹³C-NMR, in an amount ranging from 1.7 wt% to 4.5 wt%;
- a fraction soluble in xylene at 25°C lower than 8.0 wt%; preferably being higher than 0.5 wt% and
- a Melt Flow Rate (ISO 1133 230°C/5.0 kg) ranging from 18.0 to 34.0 g/10min;
- (c2) from 57 wt% to 79 wt%; of a copolymer of propylene and ethylene having:
- units derived from ethylene, measured according to ¹³C-NMR, in an amount ranging from 18.0 wt% to 36.0 wt%;
said polypropylene ethylene copolymer (c) being further **characterized by**:
- a Melt Flow Rate (ISO 1133 230°C/5.0 kg) ranging from 0.2 to 1.7 g/10 min;
- an amount of fraction soluble in xylene at 25°C ranging from 52.0 wt% to 76.0 wt%;
- intrinsic viscosity fraction soluble in xylene at 25°C, measured in tetrahydronaphthalene at 135 °C, ranging from 2.1 to 4.7 dl/g; and,
in the said composition the sum of c1) and c2), being referred to the total weight of c1) and c2), is 100,
the sum of the amounts of (A), (B) and (C) being referred to the total weight of (A), (B) and (C) is 100;
the recycled polypropylene composition (A) has:
Ethylene derived units content, measured with ¹³C-NMR, ranging from 2.50 wt% to 7.30 wt%;
Butene derived units content, measured with ¹³C-NMR, ranging from 0.05 wt% to 0.30 wt%;
Hexene derived units content, measured with ¹³C-NMR, ranging from 0.03 wt% to 0.23 wt%;
Octene derived units content, measured with ¹³C-NMR, ranging from 0.02 wt% to 0.50 wt%;
Polyethylene terephthalate content , measured with ¹³C-NMR, ranging from 0.05 wt% to 0.8 wt% Propylene derived units content, measured with ¹³C-NMR, higher than 87.4 wt% Density, ISO 1183-1, ranging from 0.9400 Kg/dm³ to 0.9500 Kg/dm³;
Melt Flow Rate (ISO 1133 230°C/2.16 kg) ranging from 1.2 to 20.3 g/10min.

2. The recycled polyolefin composition according to claim 1 wherein the component (A) ranges from 42 wt% to 60 wt% component (B) ranges from 22 wt% to 38 wt%; and component C) ranges from 15 wt% to 26 wt%;

3. The recycled polyolefin composition according to claims 1 or 2 wherein in component B) component b1) ranges from 69 wt% to 87 wt%; and component b2) ranges from 13 wt% to 31 wt%;.

4. The recycled polyolefin composition according to any of the preceding claims wherein in component C) component c1) ranges from 23 wt% to 41 wt%; and component c2) ranges from 59 wt% to 77 wt%;

5. The recycled polyolefin composition according to any of the preceding claims wherein in component c1) the units derived from ethylene, measured according to ¹³C-NMR, in an amount ranges from 2.0 wt% to 4.3 wt%.

6. The recycled polyolefin composition according to any of the preceding claims wherein component B) has an amount of fraction soluble in xylene at 25°C ranging from 9.0 wt% to 29.0 wt%;

7. The recycled polyolefin composition according to any of the preceding claims wherein component (C) has the amount of fraction soluble in xylene at 25°C ranging from 54.0 wt% to 74.0 wt%.

8. The recycled polyolefin composition according to any of the preceding claims wherein component (B) has the intrinsic viscosity fraction soluble in xylene at 25°C, measured in tetrahydronaphthalene at 135 °C, ranging from 2.2 to 4.1 dl/g.

9. The recycled polyolefin composition according to any of the preceding claims wherein component (C) has the intrinsic viscosity fraction soluble in xylene at 25°C, measured in tetrahydronaphthalene at 135 °C, ranging from 2.4 to 4.3 dl/g.

10. The recycled polyolefin composition according to a to any of the preceding claims wherein in component A) the melt flow rate (ISO 1133-1 230°C/2.16 kg) ranges from 3.4 to 17.4 g/10min.

11. The recycled polyolefin composition according to any of the preceding claims wherein in component (B) the Melt Flow Rate (ISO 1133 230°C/5.0 kg) ranges from 0.5 to 2.5 g/10min.

12. The recycled polyolefin composition according to any of the preceding claims wherein in component (C) the tensile modulus, measured according to ISO 527-2, ranges from 1020 N/mm² to 1630 N/mm².

13. The recycled polyolefin composition according to any of the preceding claims wherein in component (C) the Melt Flow Rate (ISO 1133 230°C/5.0 kg) ranges from 0.3 to 1.4 g/10min.

14. The recycled polyolefin composition according to any of the preceding claims wherein component A) has the Density, ISO 1183-1, ranging from 0.9423 Kg/dm³ to 0.9484 Kg/dm³.

15. A blow molded article obtained from the recycled polyolefin composition according to any of the preceding claims.

## Patentansprüche

1. Eine recycelte Polyolefin-Zusammensetzung, umfassend:
A) 40 Gew.-% bis 65 Gew.-% einer recycelten Polypropylen-Zusammensetzung;
B) 20 Gew.-% bis 40 Gew.-% eines ersten Polypropylen-Ethylen-Copolymers, umfassend:
(b1) 67 Gew.-% bis 89 Gew.-% eines Propylen-Homopolymers mit:
- einen in Xylol bei 25 °C löslichen Anteil von weniger als 4,0 Gew.-%; und
- einen Schmelzindex (ISO 1133, 230 °C/5,0 kg) im Bereich von 0,9 bis 3,4 g/10 min;
- (b2) 11 Gew.-% bis 33 Gew.-% eines Copolymers aus Propylen und Ethylen mit:
- von Ethylen abgeleitete Einheiten, gemessen gemäß ¹³C-NMR, in einer Menge im Bereich von 35,0 Gew.-% bis 65,0 Gew.-%;
wobei das genannte Polypropylen-Ethylen-Copolymer (B) ferner **gekennzeichnet ist durch**:
- einer Schmelzflussrate (ISO 1133, 230 °C/5,0 kg) im Bereich von 0,3 bis 2,8 g/10 min;
- einen Anteil der bei 25 °C in Xylol löslichen Fraktion im Bereich von 7,0 Gew.-% bis 31,0 Gew.-%;
- eine intrinsische Viskosität des bei 25 °C in Xylol löslichen Anteils, gemessen in Tetrahydronaphthalin bei 135 °C, im Bereich von 1,9 bis 4,5 dl/g;
wobei in dem genannten Polypropylen-Ethylen-Copolymer die Summe aus b1) und b2), bezogen auf das Gesamtgewicht von b1) und b2), 100 beträgt,
C) 14 Gew.-% bis 28 Gew.-%; eines zweiten Polypropylen-Ethylen-Copolymers, das umfasst:
- (c1) 21 Gew.-% bis 43 Gew.-% eines Propylen-Ethylen-Copolymers mit:
- aus Ethylen abgeleitete Einheiten, gemessen mittels ¹³C-NMR, in einer Menge von 1,7 Gew.-% bis 4,5 Gew.-%;
- ein Anteil, der bei 25 °C in Xylol löslich ist und weniger als 8,0 Gew.-% beträgt; vorzugsweise ist er höher als 0,5 Gew.-% und
- eine Schmelzflussrate (ISO 1133, 230 °C/5,0 kg) im Bereich von 18,0 bis 34,0 g/10 min;
- (c2) 57 Gew.-% bis 79 Gew.-%; eines Copolymers aus Propylen und Ethylen mit:
- von Ethylen abgeleitete Einheiten, gemessen gemäß ¹³C-NMR, in einer Menge im Bereich von 18,0 Gew.-% bis 36,0 Gew.-%;
wobei das genannte Polypropylen-Ethylen-Copolymer (c) ferner **gekennzeichnet ist durch**:
- einer Schmelzflussrate (ISO 1133, 230 °C/5,0 kg) im Bereich von 0,2 bis 1,7 g/10 min;
- einen Anteil der bei 25 °C in Xylol löslichen Fraktion im Bereich von 52,0 Gew.-% bis 76,0 Gew.-%;
- eine intrinsische Viskosität des bei 25 °C in Xylol löslichen Anteils, gemessen in Tetrahydronaphthalin bei 135 °C, im Bereich von 2,1 bis 4,7 dl/g; und
wobei in der genannten Zusammensetzung die Summe aus c1) und c2), bezogen auf das Gesamtgewicht von c1) und c2), 100 beträgt,
wobei die Summe der Mengen von (A), (B) und (C), bezogen auf das Gesamtgewicht von (A), (B) und (C), 100 beträgt;
die Zusammensetzung aus recyceltem Polypropylen **(A)** weist Folgendes auf:
einen Gehalt an von Ethylen abgeleiteten Einheiten, gemessen mittels ¹³C-NMR, im Bereich von 2,50 Gew.-% bis 7,30 Gew.-%;
einen Gehalt an von Buten abgeleiteten Einheiten, gemessen mittels ¹³C-NMR, im Bereich von 0,05 Gew.-% bis 0,30 Gew.-%;
einen Gehalt an von Hexen abgeleiteten Einheiten, gemessen mittels ¹³C-NMR, im Bereich von 0,03 Gew.-% bis 0,23 Gew.-%;
Gehalt an von Octen abgeleiteten Einheiten, gemessen mittels ¹³C-NMR, im Bereich von 0,02 Gew.-% bis 0,50 Gew.-%;
Gehalt an Polyethylenterephthalat, gemessen mittels ¹³C-NMR, im Bereich von 0,05 Gew.-% bis 0,8 Gew.-%
Gehalt an von Propylen abgeleiteten Einheiten, gemessen mittels ¹³C-NMR, über 87,4 Gew.-% Dichte gemäß ISO 1183-1 im Bereich von 0,9400 ^{kg/dm³}bis 0,9500 ^{kg/dm³};
Schmelzindex (ISO 1133, 230 °C/2,16 kg) im Bereich von 1,2 bis 20,3 g/10 min.

2. Die recycelte Polyolefin-Zusammensetzung gemäß Anspruch 1, wobei die Komponente (A) zwischen 42 Gew.-% und 60 Gew.-% liegt, die Komponente (B) zwischen 22 Gew.-% und 38 Gew.-% liegt und die Komponente (C) zwischen 15 Gew.-% und 26 Gew.-% liegt;

3. Die recycelte Polyolefin-Zusammensetzung gemäß Anspruch 1 oder 2, wobei in Komponente B) die Komponente b1) im Bereich von 69 Gew.-% bis 87 Gew.-% liegt und die Komponente b2) im Bereich von 13 Gew.-% bis 31 Gew.-% liegt;

4. Die recycelte Polyolefin-Zusammensetzung gemäß einem der vorstehenden Ansprüche, wobei in Komponente C) der Anteil von Komponente c1) zwischen 23 Gew.-% und 41 Gew.-% liegt; und der Anteil von Komponente c2) zwischen 59 Gew.-% und 77 Gew.-% liegt;

5. Die recycelte Polyolefin-Zusammensetzung gemäß einem der vorstehenden Ansprüche, wobei in Komponente c1) die von Ethylen abgeleiteten Einheiten, gemessen gemäß ¹³C-NMR, in einer Menge von 2,0 Gew.-% bis 4,3 Gew.-% vorliegen.

6. Die recycelte Polyolefin-Zusammensetzung gemäß einem der vorstehenden Ansprüche, wobei die Komponente B) einen Anteil an bei 25 °C in Xylol löslichen Fraktionen im Bereich von 9,0 Gew.-% bis 29,0 Gew.-% aufweist;

7. Die recycelte Polyolefin-Zusammensetzung gemäß einem der vorstehenden Ansprüche, wobei die Komponente (C) einen Anteil an in Xylol bei 25 °C löslichem Anteil im Bereich von 54,0 Gew.-% bis 74,0 Gew.-% aufweist.

8. Die recycelte Polyolefin-Zusammensetzung gemäß einem der vorstehenden Ansprüche, wobei die Komponente (B) eine intrinsische Viskosität des in Xylol bei 25 °C löslichen Anteils, gemessen in Tetrahydronaphthalin bei 135 °C, im Bereich von 2,2 bis 4,1 dl/g aufweist.

9. Die recycelte Polyolefin-Zusammensetzung gemäß einem der vorstehenden Ansprüche, wobei die Komponente (C) einen Anteil der bei 25 °C in Xylol löslichen intrinsischen Viskosität aufweist, gemessen in Tetrahydronaphthalin bei 135 °C, der im Bereich von 2,4 bis 4,3 dl/g liegt.

10. Die recycelte Polyolefin-Zusammensetzung gemäß einem der vorstehenden Ansprüche, wobei in Komponente A) der Schmelzindex (ISO 1133-1, 230 °C/2,16 kg) im Bereich von 3,4 bis 17,4 g/10 min liegt.

11. Die recycelte Polyolefin-Zusammensetzung gemäß einem der vorstehenden Ansprüche, wobei in Komponente (B) der Schmelzindex (ISO 1133, 230 °C/5,0 kg) im Bereich von 0,5 bis 2,5 g/10 min liegt.

12. Die recycelte Polyolefin-Zusammensetzung gemäß einem der vorstehenden Ansprüche, wobei in Komponente (C) der Zugmodul, gemessen nach ISO 527- , im Bereich von 1020 N/mm²bis 1630 ^{N/mm²}liegt.

13. Die recycelte Polyolefin-Zusammensetzung gemäß einem der vorstehenden Ansprüche, wobei in Komponente (C) der Schmelzindex (ISO 1133, 230 °C/5,0 kg) im Bereich von 0,3 bis 1,4 g/10 min liegt.

14. Die recycelte Polyolefin-Zusammensetzung gemäß einem der vorstehenden Ansprüche, wobei die Komponente A) eine Dichte gemäß ISO 1183-1 im Bereich von 0,9423 ^{kg/dm³}bis 0,9484 kg^{/dm3}aufweist.

15. Ein blasgeformter Gegenstand, der aus der recycelten Polyolefin-Zusammensetzung gemäß einem der vorstehenden Ansprüche hergestellt wurde.

## Revendications

1. Composition de polyoléfine recyclée comprenant :
A) de 40 % en poids à 65 % en poids d'une composition de polypropylène recyclé ;
B) de 20 % en poids à 40 % en poids d'un premier copolymère de polypropylène et d'éthylène comprenant :
(b1) de 67 % en poids à 89 % en poids d'un homopolymère de propylène, présentant :
- une fraction soluble dans le xylène à 25 °C inférieure à 4,0 % en poids ; et
- un indice de fluidité à chaud (ISO 1133, 230 °C/5,0 kg) compris entre 0,9 et 3,4 g/10 min ;
- (b2) de 11 % en poids à 33 % en poids d'un copolymère de propylène et d'éthylène présentant:
- des motifs dérivés de l'éthylène, mesurés par RMN au carbone 13 selon la ^{formule (13)}, en une quantité comprise entre 35,0 % en poids et 65,0 % en poids ;
ledit copolymère de polypropylène et d'éthylène (B) étant en outre **caractérisé par** :
- un indice de fluidité à chaud (ISO 1133, 230 °C/5,0 kg) compris entre 0,3 et 2,8 g/10 min ;
- une teneur en fraction soluble dans le xylène à 25 °C comprise entre 7,0 % en poids et 31,0 % en poids ;
- une viscosité intrinsèque de la fraction soluble dans le xylène à 25 °C, mesurée dans le tétrahydronaphtalène à 135 °C, comprise entre 1,9 et 4,5 dl/g ;
dans ledit copolymère de polypropylène et d'éthylène, la somme de b1) et b2), rapportée au poids total de b1) et b2), est égale à 100,
C) de 14 % en poids à 28 % en poids ; d'un deuxième copolymère de polypropylène et d'éthylène comprenant :
- (c1) de 21 % en poids à 43 % en poids d'un copolymère de propylène et d'éthylène, présentant:
- des motifs dérivés de l'éthylène, mesurés par RMN¹³C, en une quantité comprise entre 1,7 % et 4,5 % en poids ;
- une fraction soluble dans le xylène à 25 °C inférieure à 8,0 % en poids ; de préférence supérieure à 0,5 % en poids et
- un indice de fluidité à chaud (ISO 1133, 230 °C/5,0 kg) compris entre 18,0 et 34,0 g/10 min ;
- (c2) de 57 % en poids à 79 % en poids ; d'un copolymère de propylène et d'éthylène présentant:
- des motifs dérivés de l'éthylène, mesurés par RMN au carbone¹³, en une quantité comprise entre 18,0 % en poids et 36,0 % en poids ;
ledit copolymère de polypropylène et d'éthylène (c) étant en outre **caractérisé par** :
- un indice de fluidité à chaud (ISO 1133, 230 °C/5,0 kg) compris entre 0,2 et 1,7 g/10 min ;
- une teneur en fraction soluble dans le xylène à 25 °C comprise entre 52,0 % en poids et 76,0 % en poids ;
- une viscosité intrinsèque de la fraction soluble dans le xylène à 25 °C, mesurée dans le tétrahydronaphtalène à 135 °C, comprise entre 2,1 et 4,7 dl/g ; et,
dans ladite composition, la somme de c1) et c2), rapportée au poids total de c1) et c2), est égale à 100,
la somme des quantités de (A), (B) et (C), rapportée au poids total de (A), (B) et (C), est égale à 100 ;
la composition de polypropylène recyclé **(A)** présente :
une teneur en motifs dérivés de l'éthylène, mesurée par RMN au¹³C, comprise entre 2,50 % en poids et 7,30 % en poids ;
une teneur en motifs dérivés du butène, mesurée par RMN au¹³C, comprise entre 0,05 % en poids et 0,30 % en poids ;
une teneur en motifs dérivés de l'hexène, mesurée par RMN au¹³C, comprise entre 0,03 % en poids et 0,23 % en poids ;
Teneur en motifs dérivés de l'octène, mesurée par RMN au¹³C, comprise entre 0,02 % et 0,50 % en poids ;
Teneur en polyéthylène téréphtalate, mesurée par RMN au¹³C, comprise entre 0,05 % et 0,8 % en poids
Teneur en motifs dérivés du propylène, mesurée par RMN au¹³C, supérieure à 87,4 % en poids Densité, selon la norme ISO 1183-1, comprise entre 0,9400 ^{kg/dm³}et 0,9500 ^{kg/dm³};
Indice de fluidité à chaud (ISO 1133, 230 °C/2,16 kg) compris entre 1,2 et 20,3 g/10 min.

2. Composition de polyoléfine recyclée selon la revendication 1, dans laquelle le composant (A) est compris entre 42 % en poids et 60 % en poids, le composant (B) est compris entre 22 % en poids et 38 % en poids, et le composant (C) est compris entre 15 % en poids et 26 % en poids ;

3. Composition de polyoléfine recyclée selon les revendications 1 ou 2, dans laquelle, au sein du composant B), le composant b1) est compris entre 69 % en poids et 87 % en poids ; et le composant b2) est compris entre 13 % en poids et 31 % en poids.

4. Composition de polyoléfine recyclée selon l'une quelconque des revendications précédentes, dans laquelle, dans le composant C), le composant c1) est compris entre 23 % en poids et 41 % en poids ; et le composant c2) est compris entre 59 % en poids et 77 % en poids ;

5. Composition de polyoléfine recyclée selon l'une quelconque des revendications précédentes, dans laquelle, dans le composant c1), les motifs dérivés de l'éthylène, mesurés par RMN au carbone¹³, sont présents en une quantité comprise entre 2,0 % en poids et 4,3 % en poids.

6. Composition de polyoléfine recyclée selon l'une quelconque des revendications précédentes, dans laquelle le composant B) présente une teneur en fraction soluble dans le xylène à 25 °C comprise entre 9,0 % en poids et 29,0 % en poids ;

7. Composition de polyoléfine recyclée selon l'une quelconque des revendications précédentes, dans laquelle le composant (C) présente une proportion de fraction soluble dans le xylène à 25 °C comprise entre 54,0 % en poids et 74,0 % en poids.

8. Composition de polyoléfine recyclée selon l'une quelconque des revendications précédentes, dans laquelle le composant (B) présente une viscosité intrinsèque de la fraction soluble dans le xylène à 25 °C, mesurée dans du tétrahydronaphtalène à 135 °C, comprise entre 2,2 et 4,1 dl/g.

9. Composition de polyoléfine recyclée selon l'une quelconque des revendications précédentes, dans laquelle le composant (C) présente une viscosité intrinsèque de la fraction soluble dans le xylène à 25 °C, mesurée dans du tétrahydronaphtalène à 135 °C, comprise entre 2,4 et 4,3 dl/g.

10. Composition de polyoléfine recyclée selon l'une quelconque des revendications précédentes, dans laquelle, pour le composant A), l'indice de fluidité à chaud (ISO 1133-1, 230 °C/2,16 kg) est compris entre 3,4 et 17,4 g/10 min.

11. Composition de polyoléfine recyclée selon l'une quelconque des revendications précédentes, dans laquelle, dans le composant (B), l'indice de fluidité à chaud (ISO 1133, 230 °C/5,0 kg) est compris entre 0,5 et 2,5 g/10 min.

12. Composition de polyoléfine recyclée selon l'une quelconque des revendications précédentes, dans laquelle, dans le composant, le module de traction, mesuré selon la norme ISO 527-2, est compris entre 1 020 N/mm²et¹ 630 N/mm².

13. Composition de polyoléfine recyclée selon l'une quelconque des revendications précédentes, dans laquelle, pour le composant (C), l'indice de fluidité à chaud (ISO 1133, 230 °C/5,0 kg) est compris entre 0,3 et 1,4 g/10 min.

14. Composition de polyoléfine recyclée selon l'une quelconque des revendications précédentes, dans laquelle le composant A) présente une densité, selon la norme ISO 1183-1, comprise entre 0,9423 ^{kg/dm³}et 0,9484 kg^{/dm3}.

15. Article moulé par soufflage obtenu à partir de la composition de polyoléfine recyclée selon l'une quelconque des revendications précédentes.
